# EUROPEAN PATENT APPLICATION

(11) **EP 3 187 042 A1**
(43) Date of publication of application: **05.07.2017**
(21) Application number: 15836861.3
(22) Date of filing: 25.08.2015
(51) Int. Cl.: A01K 63/04

(54) **CLOSED REARING METHOD AND CLOSED REARING APPARATUS**

(30) Priority: 26.08.2014 JP 2014171466
(71) Applicant: Kitz Corporation, Chiba-shi, Chiba 261-8577 (JP)
(72) Inventor: YOSHIYA, Shota, Chiba-shi Chiba 261-8577 (JP); KATAKURA, Toshihiro, Chino-shi Nagano 391-0012 (JP); FUJI, Masatoshi, Chino-shi Nagano 391-0012 (JP); SAKURAI, Takako, Chino-shi Nagano 391-0012 (JP)
(74) Representative: Manitz Finsterwald Patentanwälte PartmbB
(86) International application number: PCT/JP2015/073897
(87) International publication number: WO 2016/031827

(57) **Abstract**

Provided are a closed rearing method and a closed rearing apparatus which can decompose and remove ammonia contained in rearing water without supplying an excessive amount of ozone and can also suppress generation of toxic oxidants. In a closed rearing method for aquatic organisms and marine animals involving an ozone treatment for decomposing ammonia in rearing water by supplying a gas containing ozone into the rearing water, the closed rearing method is characterized in that aquaculture is performed in a closed environment by a first step for determining the ozone concentration of the gas and pH conditions of the rearing water suitable for reducing the amount of generation of toxic oxidants by previously treating the rearing water to reduce ammonia contained therein to the target value by using an apparatus for actually conducting the treatment and a second step for conducting an ozone treatment of the rearing water according to the suitable ozone concentration and pH conditions determined in the first step.

## Description

### Technical Field

The present invention relates to a closed rearing method and a closed rearing apparatus for rearing aquatic organisms and marine animals by purifying rearing water while circulating.

### Background Art

In rearing water for aquatic organisms and marine animals in aquaculture farms and aquaria, excrements from aquatic organisms and marine animals, residual feed and the like are decomposed by microorganisms in the water and ammonia nitrogen (hereinafter, simply referred to as "ammonia") accumulates in the water. Since this ammonia has high biotoxicity and causes serious respiratory problems in aquatic organisms and marine animals, ammonia accumulates in rearing water in the case of long term rearing and high density aquaculture, leading to a significant problem.

In the simplest method for removing ammonia in rearing water, fresh seawater is poured into a rearing water tank and the fresh seawater is exchanged with rearing water containing ammonia. However, the waste water thereof has a lot of problems such as high environmental load, a necessity of cost for water exchange and the like. These problems do not occur if rearing water is cyclically used, however, in this case, ammonia contained in rearing water should be decomposed and removed within rearing facilities.

In a water tank using rearing water while circulating, ammonia has been conventionally removed by biodegradation using microorganisms. The biotreatment method is a method utilizing metabolism of microorganisms, and is the most frequently used method because aquatic organisms and marine animals are not harmed and high level facilities and operating technologies are not required. In this method, ammonia is converted to nitrite and nitrate by aerobic ammonia nitrification bacteria, then, nitrate is converted to nitrite and nitrogen by anaerobic denitrification bacteria and nitrite and nitrogen are released into air.

This biotreatment method, however, has problems that the term necessary for cultivating ammonia nitrification bacteria which can sufficiently decompose ammonia in water is as extremely long as several weeks to several months, that the biotreatment tends to be influenced by variation of load and when water temperature is low, the activity of ammonia nitrification bacteria lowers remarkably, thus, fine management of operation depending on the state of load is necessary so that environments under which organisms can act suitably can be maintained, that the denitrification treatment is conducted under oxygen-free condition and an aeration pump for preventing transfer of rearing water under oxygen-free condition to a rearing tank needs large power and is expensive, that wide premises are necessary for a treating tank, and the like.

Recently, there is a suggestion on physical treatments using ozone and electrolytically produced hypochlorous acid, as a method of efficiently decomposing and removing ammonia in rearing water. Since ammonia decomposition by these physical treatments has a possibility that oxidizing substances harmful on aquatic organisms and marine animals, called oxidant, accumulate in rearing water in the process of the decomposition treatment, a technology for regulating generation of this oxidant and also a technology for removing the generated oxidant are suggested.

Patent document 1 discloses a rearing apparatus constituted of an ozone treatment apparatus for treating rearing water with ozone, an oxidizing product treatment apparatus for treating an oxidizing product with activated carbon, and the like and controlling the injection amount of ozone so that the ozone concentration of rearing water to be treated by the ozone treatment apparatus is at least 5-fold of the ammonia nitrogen concentration in rearing water before flowing into the ozone treatment apparatus, as a rearing apparatus with which rearing water can be purified only by a physicochemical treatment not by a biological treatment, and describes that an oxidizing product (oxidant) generated by reaction of a bromine ion and ozone in rearing water is removed completely by activated carbon in the oxidative product treatment apparatus.

The document describes that regeneration of ammonia can be suppressed if an amount of ozone is injected so as to give the ozone concentration which is at least 5-fold or more, desirably 10-fold or more of the ammonia nitrogen concentration before the ozone treatment, because, when the amount of an oxidizing product generated in the ozone treatment apparatus is smaller as compared with the amount of ammonia present, ammonia is regenerated.

### Prior Art Document

### Patent Document

Patent document 1: Japanese Patent No. 2635432

### Summary of the Invention

### Problem to be Solved by the Invention

In the rearing apparatus described in Patent document 1, the ammonia nitrogen concentration in rearing water before flowing into the ozone reaction apparatus is detected by a sensor and the amount of injection of ozone is controlled so that the ozone concentration of rearing water to be treated by the ozone treatment apparatus is at least 5-fold of the nitrogen concentration, for preventing regeneration of ammonia in the ozone reaction apparatus, however, if the amount of injection of ozone increases, there occurs generation of highly persistent oxidants showing high toxicity on organisms and which cannot be removed easily.

On the other hand, the present inventors have variously experimented and investigated, for practically realizing a method for decomposing and removing ammonia contained in rearing water with ozone. In the process of the experiments and the investigations, it has been found that pH of rearing water to be treated with ozone and the concentration of ozone in a gas to be supplied in the ozone treatment exert a significant influence on the bromic acid generation amount with respect to the ammonia decomposition amount by the ozone treatment, though the details thereof will be described later.

That is, it has been found the bromic acid generation amount with respect to the ammonia decomposition amount is smaller when pH of rearing water in treating with ozone is low rather than when it is high. Further, it has been found that the bromic acid generation amount with respect to the ammonia decomposition amount is smaller when the ozone concentration of a gas to be supplied in treating with ozone is lower, and a difference of the ozone concentration of a gas to be supplied scarcely affects the ammonia decomposition amount with respect to the ozone supplying amount.

Still further, it has been confirmed that the amount of generation of bromic acid with respect to the ammonia decomposition amount manifests a difference also by a difference of the method of supplying ozone to rearing water in the ozone treatment and a difference of the apparatus constitution such as the presence or absence of ultraviolet irradiation.

Based on the findings described above, even if the ozone injection amount of the rearing apparatus described in Patent document 1 is effective for decomposing and removing ammonia in rearing water, this ozone injection amount simultaneously causes a high risk of generation of a large amount of bromic acid (toxic oxidant) highly toxic on aquatic organisms and marine animals, thus, a risk of generation of toxic oxidants is always present ammonia in rearing water is decomposed, removed and disinfected.

The present invention has been developed to solve the above-described problems and has an object of providing a closed rearing method and a closed rearing apparatus with which it is possible to decompose and remove ammonia in rearing water without supplying an excessive amount of ozone and with which it is also possible to suppress generation of toxic oxidants.

### Means for Solving the Problem

For attaining the above-described object, the invention according to Claim 1 is a closed rearing method for aquatic organisms and marine animals involving an ozone treatment for decomposing ammonia in rearing water by supplying a gas containing ozone into the rearing water, characterized in that aquaculture is performed in a closed environment by a first step for determining the ozone concentration of the gas and pH conditions of the rearing water suitable for reducing the amount of generation of toxic oxidants by previously treating the rearing water to reduce ammonia contained therein to the target value by using an apparatus for actually conducting the treatment and a second step for conducting an ozone treatment of the rearing water according to the suitable ozone concentration and pH conditions determined in the above-described first step.

The invention according to Claim 2 is the closed rearing method, wherein a gas containing ozone is supplied to the rearing water by means of a diffusion tower.

The invention according to Claim 3 is a closed rearing apparatus for fish and shellfish for performing an ozone treatment for decomposing ammonia in rearing water by supplying a gas containing ozone into the rearing water, characterized in that the apparatus performs aquaculture in a closed environment by a setting means for determining the ozone concentration of the gas and pH conditions of the rearing water suitable for reducing the amount of generation of toxic oxidants by previously treating the rearing water to reduce ammonia contained therein to the target value and a treating means for conducting an ozone treatment of the rearing water according to the suitable ozone concentration and pH conditions determined by the setting means.

The invention according to Claim 4 is the closed rearing apparatus, equipped with a diffusion tower for supplying a gas containing ozone to the rearing water.

### Effect of the Invention

According to the invention of Claim 1, it is possible to rear aquatic organisms and marine animals in a closed environment by surely decomposing and removing ammonia in rearing water by minimizing the toxic oxidant (bromic acid) generation amount with respect to the ammonia decomposition amount which is influenced by a difference of the constitution of the ozone treatment apparatus and a difference of the ozone treatment conditions, since treatment conditions for poor generation of oxidants are determined in the first step by performing the ozone treatment of rearing water using an apparatus for actually conducting the treatment, and then, in the second step, the ozone treatment of rearing water is performed according to the treatment conditions determined in the first step.

According to the invention of Claim 2, it is possible to suppress generation of toxic oxidants while decomposing and removing ammonia in rearing water, since supplying of a gas containing ozone to rearing was is carried out by means of a diffusion tower.

According to the invention of Claim 3, it is possible to rear aquatic organisms and marine animals in a closed environment by surely decomposing and removing ammonia in rearing water by minimizing the generation amount of toxic oxidants, since ammonia in rearing water is decomposed and removed by a setting means for determining treatment conditions for poor generation of oxidants by previously conducting the ozone treatment of rearing water actually and a treating means for conducting the ozone treatment of rearing water according to the treatment conditions determined by this setting means.

According to the invention of Claim 4, it is possible to suppress generation of toxic oxidants and to decompose and remove ammonia in rearing water, since it has a diffusion tower for supplying a gas containing ozone to rearing water.

### Brief Explanation of Drawings

Fig. 1 is a schematic view showing one example of the closed rearing apparatus in the present invention.
Fig. 2 is a schematic view showing another example of the closed rearing apparatus in the present invention.
Fig. 3 is a schematic view showing a test apparatus in an example.
Fig. 4 is a schematic view showing a test apparatus in a reference example.
Fig. 5 is a graph showing the test result that a difference of the method of supplying ozone to water to be treated exerts an influence on the bromic acid generation amount with respect to the ammonia decomposition amount.
Fig. 6 is a graph showing the test result that the presence or absence of ultraviolet irradiation in the ozone treatment exerts an influence on the bromic acid generation amount with respect to the ammonia decomposition amount.
Fig. 7 is a graph showing the test result that a difference of pH of water to be treated at an ozone concentration of 30 g/m³ exerts an influence on the bromic acid generation amount with respect to the ammonia decomposition amount.
Fig. 8 is a graph showing the test result that a difference of pH of water to be treated at an ozone concentration of 80 g/m³ exerts an influence on the bromic acid generation amount with respect to the ammonia decomposition amount.
Fig. 9 is a graph showing the test result that a difference of pH of water to be treated at an ozone concentration of 50 g/m³ exerts an influence on the bromic acid generation amount with respect to the ammonia decomposition amount.
Fig. 10 is a graph showing the test result that a difference of pH of water to be treated at an ozone concentration of 14 g/m³ exerts an influence on the bromic acid generation amount with respect to the ammonia decomposition amount.
Fig. 11 is a graph showing the test result that a difference of pH of water to be treated at an ozone concentration of 4 g/m³ exerts an influence on the bromic acid generation amount with respect to the ammonia decomposition amount.
Fig. 12 is a graph showing the test result that a difference of the concentration of ozone to be supplied to water to be treated exerts an influence on the bromic acid generation amount with respect to the ammonia decomposition amount.
Fig. 13 is a graph showing the test result that a difference of the concentration of ozone to be supplied to water to be treated of pH8 exerts an influence on the bromic acid generation amount with respect to the ammonia decomposition amount.
Fig. 14 is a graph showing the test result that a difference of the concentration of ozone to be supplied to water to be treated of pH7 exerts an influence on the bromic acid generation amount with respect to the ammonia decomposition amount.
Fig. 15 is a graph showing the test result that a difference of the concentration of ozone to be supplied to water to be treated of pH6 exerts an influence on the bromic acid generation amount with respect to the ammonia decomposition amount.
Fig. 16 is a graph showing the test result of an influence exerted on the ammonia decomposition amount with respect to the ozone supplying amount by a difference of the concentration of ozone to be supplied to water to be treated.
Fig. 17 is a graph showing the test result of an influence exerted on the ammonia decomposition amount with respect to the ozone supplying amount by a difference of pH of water to be treated.

### Modes for Carrying Out the Invention

Embodiments of the closed rearing method and the closed rearing apparatus in the present invention will be illustrated below in detail referring to drawings.

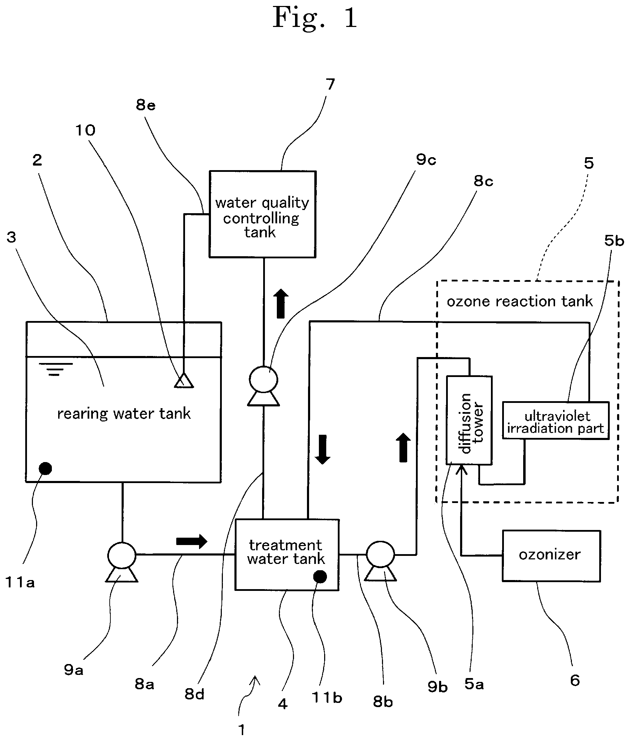

Fig. 1 is a schematic view showing the apparatus constitution by a batch treatment as one embodiment of the closed rearing apparatus of the present invention. This closed rearing apparatus 1 is constituted of a rearing water tank 2 for rearing aquatic organisms and marine animals, a treatment water tank 4 for storing rearing water 3 (water to be treated) partially extracted from the rearing water tank 2 for conducting a purification treatment of ammonia, an ozone reaction tank 5 for treating water to be treated with ozone, an ozonizer 6 generating an ozone gas and supplying the gas to the ozone reaction tank 5, a water quality controlling tank 7 for performing water quality control of water to be treated after the ozone treatment according to demand, a pipeline 8 connecting them, and a water delivery pump 9 provided in the pipeline 8. Further, the pipeline 8 has a valve not shown which is opened or closed appropriately.

In the present embodiment, a closed rearing apparatus for rearing fish and shellfish is exemplified, but the present invention is not limited to fish and shellfish, and can be applied also to aquatic organisms other than fish and shellfish and marine animals such as dolphin and the like, can be applied not only to aquaculture but also to rearing for display and culture of zooplankton.

The rearing water tank 2 and the treatment water tank 4 are connected via a pipeline 8a, and a water delivery pump 9a is provided in the middle of the pipeline 8a. The treatment water tank 4 and the ozone reaction tank 5 are connected by pipelines 8b and 8c, and a water delivery pump 9b is provided in the middle of the pipeline 8b, and water to be treated stored in the treatment water tank 4 can be circulated between it and the ozone reaction tank 5 via pipelines 8b, 8c. A pipeline 8d is provided between the treatment water tank 4 and the water quality controlling tank 7, and a water delivery pump 9c is provided in the middle of the pipeline 8d. A pipeline 8e is provided between the water quality controlling tank 7 and the rearing water tank 2, and a discharge port 10 is provided at the end of the pipeline 8e. Under such a constitution, the rearing water 3 can be partially extracted from the rearing water tank 2, treated with ozone, then, refluxed to the rearing water tank 2.

The rearing water tank 2 is a water tank containing inside the rearing water 3 (seawater) and performing rearing of aquatic organisms and marine animals, and the pipeline 8a connecting the rearing water tank 2 and the treatment water tank 4 is connected to the bottom thereof. Since the water delivery pump 9a is provided in the middle of this pipeline 8a, the rearing water 3 stored in the rearing water tank 2 can be partially extracted and supplied to the treatment water tank 4. It is preferable that a measurement instrument 11a for measuring the ammonia concentration, pH and the like of the rearing water 3 is disposed in the rearing water tank 2.

The treatment water tank 4 is a water tank for storing water to be treated extracted from the rearing water tank 2, and the pipelines 8b, 8c connecting cyclically to the ozone reaction tank 5 are connected to the tank 4. Since the water delivery pump 9b is provided in the middle of this pipeline 8a, water to be treated stored in the treatment water tank 4 can be cyclically supplied to the ozone reaction tank 5 via the pipelines 8b, 8c. It is preferable that a measurement instrument 11b for measuring the ammonia concentration, pH and the like of water to be treated is disposed in the treatment water tank 4. Further, since generation of bromic acid can be suppressed if pH of water to be treated is controlled in a suitable range as described later, it is preferable that a metering pump for adding a pH controlling agent is provided in the treatment water tank 4.

The ozone reaction tank 5 is constituted of a diffusion tower 5a in which a gas containing ozone is diffused and supplied to water to be treated and ammonia and ozone in the water to be treated are reacted to decompose and remove ammonia, and an ultraviolet irradiation part 5b in which water to be treated containing supplied ozone is irradiated with ultraviolet by a disinfectant UV lamp to disinfect unwanted bacteria and viruses contained in the water to be treated and the residual ozone remaining in the water to be treated without being used for decomposition and removal of ammonia is decomposed.

It is possible to use a mixing pump as a means for supplying ozone to water to be treated, however, since the bromic acid generation amount with respect to the ammonia decomposition amount is larger when a mixing pump is used as compared with the case of use of a diffusion tower as described later, a diffusion tower is used as a means for supplying ozone to water to be treated from the standpoint of minimizing the generation amount of bromic acid in the present example. The diffusion tower is an apparatus having a vessel which can house inside water to be treated and a means for supplying (diffusion-injecting) a gas containing ozone in the form of bubble to the water to be treated housed in this vessel. In the diffusion tower, a gas containing ozone can be injected from a lower part or a side part of the vessel, and it is more preferable to inject the gas from a lower part for allowing the gas to efficiently contact with water to be treated. This diffusion tower is different from a mixing pump by which a gas is injected by providing a pressure difference between the primary side and the secondary side.

The ozonizer 6 generates ozone by silent discharge mode or electrolysis mode from a gas as a raw material of ozone and supplies ozone to the diffusion tower 5a. As the gas as a raw material of ozone generated in the ozonizer 6, air itself may be supplied by a compressor, oxygen in air may be concentrated by an oxygen concentrator (PSA: Pressure Swing Adsorption) and supplied, or oxygen may be supplied directly from an oxygen cylinder.

The water quality controlling tank 7 is a water tank for adjusting water qualities such as pH, oxidation reduction potential and the like of water to be treated to the same values of the rearing water 3 in the rearing water tank 2, for preventing shock on aquatic organisms and marine animals in the rearing water tank 2 when returning water to be treated having undergone the ozone treatment to the rearing water tank 2, and it is preferable to provide the water quality controlling tank 7 if necessary.

In addition to the water quality controlling tank 7, a tower or water tank filled with a reducing agent may be provided in pipelines (8c, 8d) for returning water to be treated to the rearing water tank 2, for removing harmful oxidizing substances such as basic acid salts generated in the ozone treatment against ammonia in rearing water.

At the end of the pipeline 8e for returning water to be treated having undergone the ozone treatment back to the rearing water tank 2, for example, a discharge port 10 composed of pipes plumbed in the form of a rake and having pores at several places and which returns water to be treated to the rearing water tank 2 while diffusing the water may be provided, to prevent stress on aquatic organisms and marine animals being reared, alternatively, water to be treated may be returned while making a swirl flow by allowing the end of the pipeline 8e to spread along the wall surface of the rearing water tank 2.

The motion of the closed rearing apparatus 1 constituted as described above will be illustrated in detail below.

The concentration (mg/L) of ammonia contained in the rearing water 3 in the rearing water tank 2 is measured by a measurement instrument 11a, and when this concentration exceeds a value believed to exert an influence on growth and life and death of aquatic organisms and marine animals, the ammonia concentration is judged to be excessive, and a purification treatment of the rearing water 3 is started.

First, the rearing water 3 is partially extracted from a bottom part of the rearing water tank 2 via the pipeline 8a, and transferred to the treatment water tank 4 by the water delivery pump 9a. In the batch mode, since the rearing water 3 in the rearing water tank 2 is partially extracted and treated, the interior content of the treatment water tank 4 is smaller than the interior content of the rearing water tank 2. An arrow in the figure indicates the flow direction of the rearing water 3 to be purified (water to be treated 3a).

When the water to be treated 3a to be purification-treated is completely stored in the treatment water tank 4, the motion of the water delivery pump 9a is stopped, the water delivery pump 9b is actuated and the water to be treated 3a is transferred to the ozone reaction tank 5, and the motion of the ozonizer 6 and the ultraviolet irradiation part 5b is started. The water to be treated 3a stored in the treatment water tank 4 flows through the pipeline 8b to reach the diffusion tower 5a in the ozone reaction tank 5, and ozone supplied from the ozonizer 6 is diffusion-injected in the diffusion tower 5a. Ammonia contained in the water to be treated 3a is decomposed and removed by this diffusion-injected ozone.

In the ultraviolet irradiation part 5b to which the water to be treated 3a is transferred following the diffusion tower 5a, unwanted bacteria and viruses contained in the water to be treated 3a are disinfected by ultraviolet emitted from a disinfectant UV lamp, and the residual ozone remaining in the water to be treated 3a without being used for decomposition and removal of ammonia is decomposed. Thereafter, the water to be treated 3a is returned to the treatment water tank 4 via the pipeline 8c.

The water to be treated 3a stored in the treatment water tank 4 circulates between the treatment water tank 4 and the ozone reaction tank 5 and ammonia is decomposed and removed gradually, leading to lowering of the concentration of ammonia, during the circulation. The time for effecting the ozone treatment can be determined from the previous test results and the like, however, it is preferable that a measurement instrument 11b for measuring the ammonia concentration, pH and the like of the water to be treated 3a is placed in the treatment water tank 4, and the treatment completion period is judged from the measured values.

After completion of decomposition and removal of ammonia by the ozone treatment in the ozone reaction tank 5, the motion of the water delivery pump 9c is started, and the water to be treated 3a having undergone the ozone treatment stored in the treatment water tank 4 is transferred to the water quality controlling tank 7 via the pipeline 8d. In returning the water to be treated 3a having undergone the ozone treatment to the rearing water tank 2, if a difference between the water qualities (pH, ORP (oxidation reduction potential) and the like) of the water to be treated 3a having undergone the ozone treatment and the water qualities of the rearing water 3 in the rearing water tank 2 is large, there is a possibility to impart shock on aquatic organisms and marine animals in the rearing water tank 2. For this reason, the water qualities are controlled in the water quality controlling tank 7 to minimize the influence on aquatic organisms and marine animals, by adding a pH controlling agent, an ORP controlling agent and the like to water to be treated after the ozone treatment passing through in the water quality controlling tank 7 for adjusting the water qualities of the water to be treated 3a having undergone the ozone treatment to the same values as the qualities of the rearing water 3 in the rearing water tank 2. Though the water quality controlling tank 7 is not indispensable, it is desirable to provide the water quality controlling tank 7 when the influence on aquatic organisms and marine animals to be reared is considered.

The water to be treated 3a which is transferred by the water delivery pump 9c and of which water qualities have been controlled in passing through the water quality controlling tank 7 flows back into the rearing water tank 2 via the pipeline 8e and the discharge port 10. Since the discharge part 10 returns the water to be treated to the rearing water tank 2 while dispersing the water in this constitution, the rearing water 3 stored in the rearing water tank 2 is not agitated excessively, thus, stress on aquatic organisms and marine animals being reared can be prevented.

Since the closed rearing apparatus 1 repeats the above-described motion, the whole rearing water 3 in the rearing water tank 2 can be purified and water qualities suitable for inhabitation of aquatic organisms and marine animals can be maintained, by continuing the purification treatment until the measurement instrument 11a placed in the rearing water tank 2 confirms that the concentration of ammonia contained in the rearing water 3 in the rearing water tank 2 reaches the standard value or lower. The time for effecting the purification treatment can be determined from the previous test results and the like, however, it is preferable that a measurement instrument 11a is placed in the rearing water tank 2 and the treatment completion period is judged from the measured values.

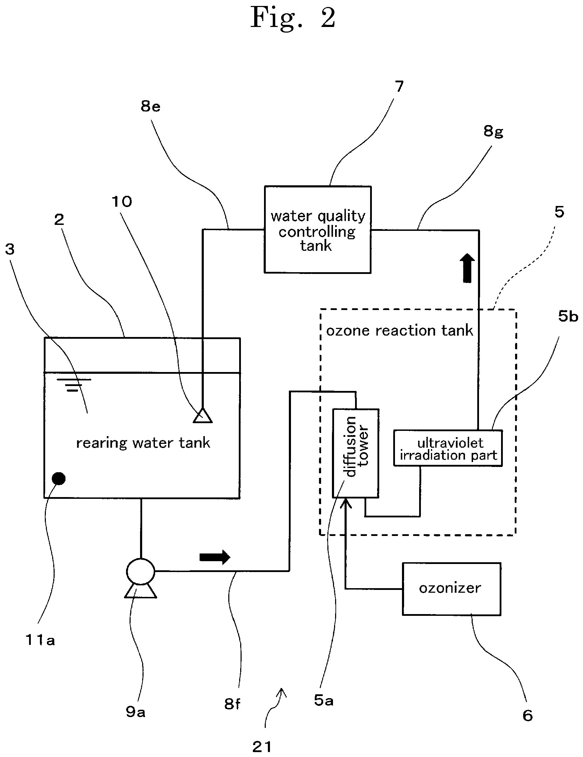

Next, another embodiment will be illustrated referring to Fig. 2. Parts common to the embodiment shown in Fig. 1 are endowed with the same numerals and explanations thereof are omitted.

Fig. 2 is a schematic view showing another embodiment of the closed rearing apparatus in the present invention, having an apparatus constitution by a one-pass (transient) treatment. The apparatus constitution of this closed rearing apparatus 21 is similar to that of the batch mode closed rearing apparatus 1 described above, and differs in that the treatment water tank 4 is not present and that the rearing water 3 extracted from the rearing water tank 2 is treated with ozone in the ozone reaction tank 5, then, returned to the rearing water tank 2 without conducting the ozone treatment again.

This closed rearing apparatus 21 is constituted of a rearing water tank 2 for rearing aquatic organisms and marine animals, an ozone reaction tank 5 for treating water to be treated with ozone, an ozonizer 6 generating an ozone gas and supplying the gas to the ozone reaction tank 5, a water quality controlling tank 7 for conducting water quality control of the water to be treated after the ozone treatment if required, a pipeline 8 connecting them, and a water delivery pump 9 disposed in the pipeline 8. The pipeline 8 has a valve not shown which is opened or closed appropriately.

The rearing water tank 2 and the ozone reaction tank 5 are connected via a pipeline 8f, and a water delivery pump 9a is disposed in the middle of the pipeline 8f. The ozone reaction tank 5 and the water quality controlling tank 7 are connected via a pipeline 8g. A pipeline 8e is provided between the water quality controlling tank 7 and the rearing water tank 2, and a discharge port 10 is provided at the end of the pipeline 8e. Under such a constitution, water to be treated as the rearing water 3 extracted continuously from the rearing water tank 2 can be treated with ozone via the ozone reaction tank 5 and the water quality controlling tank 7 by the water delivery pump 9a, then, returned back to the rearing water tank 2.

Also in the case of the closed rearing apparatus 21, the concentration (mg/L) of ammonia contained in the rearing water 3 in the rearing water tank 2 is measured by the measurement instrument 11a, and when this concentration exceeds a value believed to exerts an influence on growth and death of aquatic organisms and marine animals, the ammonia concentration is judged to be excessive, and the purification treatment of the rearing water 3 is started, like the closed rearing apparatus 1.

The rearing water 3 is extracted continuously from a bottom part of the rearing water tank 2 via the pipeline 8f, and transferred to the ozone reaction tank 5 by the water delivery pump 9a. An arrow in the figure indicates the flow direction of the rearing water 3 to be purification-treated (water to be treated). The water to be treated flows through the pipeline 8f to reach the diffusion tower 5a in the ozone reaction tank 5, ozone supplied from the ozonizer 6 is diffused and injected into the water in the diffusion tower 5a, and ammonia contained in the water to be treated is decomposed and removed. The water to be treated reaches the ultraviolet irradiation part 5b following the diffusion tower 5a, and unwanted bacteria and viruses contained in the water to be treated are disinfected by ultraviolet emitted from a disinfectant UV lamp, and the residual ozone remaining in the water to be treated without being used for decomposition of ammonia is decomposed.

After completion of decomposition and removal of ammonia by the ozone treatment in the ozone reaction tank 5, the water to be treated is transferred to the water quality controlling tank 7, and subjected to necessary water quality control, then, returned back to the rearing water tank 2 via the pipeline 8e and the discharge port 10.

Since the closed rearing apparatus 21 repeats the motion of continuously extracting the rearing water 3 from the rearing water tank 2 and subjecting the water to the purification treatment before returning the water back to the rearing water tank 2 as described above, the whole rearing water 3 in the rearing water tank 2 can be purified and water qualities suitable for inhabitation of aquatic organisms and marine animals can be maintained, by continuing the purification treatment until the measurement instrument 11a placed in the rearing water tank 2 confirms that the concentration of ammonia contained in the rearing water 3 in the rearing water tank 2 reaches the standard value or lower. The time for effecting the purification treatment can be determined from the previous test results and the like, however, it is preferable that a measurement instrument 11a is placed in the rearing water tank 2 and the treatment completion period is judged from the measured values.

The operation of the closed rearing apparatus 1 and the closed rearing apparatus 21 can be conducted manually, but it is also possible to control the motion of a valve provided in a pipeline, a water delivery pump and an ozonizer by a control apparatus. In this case, if the control apparatus has functions of recording and outputting the operation log and the states of operation control of a rearing apparatus including temperature, pH, dissolved oxygen concentration, dissolved carbon dioxide concentration, salt content, oxidation reduction potential, hardness, alkalinity and dissolved organic substance concentration of rearing water, and motion and water delivery amount of a pump and a valve, and the like, and of emergency-alarming and externally communicating data, and the like, in combination, a rearing apparatus can be operated stably as much as possible and automatically.

Next, the closed rearing method in the present invention will be illustrated. The closed rearing method in the present invention is a rearing method using a closed rearing apparatus, and has a step (first step) for determining the ozone concentration (the amount of ozone contained in a gas to be supplied) and pH conditions of rearing water suitable for reducing the amount of generation of oxidants by previously treating the rearing water to reduce ammonia contained therein to the target value by using an apparatus for actually conducting the treatment and a step (second step) for conducting an ozone treatment of the rearing water according to the suitable ozone concentration and pH conditions determined in the above-described step (first step).

First, the reason for performing a step (first step) for determining the ozone concentration (the amount of ozone contained in a gas to be supplied) and pH conditions of rearing water suitable for reducing the amount of generation of oxidants by previously treating the rearing water to reduce ammonia contained therein to the target value by using an apparatus for actually conducting the treatment is explained. In this context, "the ozone concentration and pH suitable for reducing the amount of generation of oxidants" are not necessarily required to be values with which the generation amount of oxidants can be made lowest, and may be set in a range in which the generation amount of oxidants can be made smaller as much as possible for maintaining suitable rearing environments, for example, while taking the ammonia decomposition speed and the like into consideration.

### EXAMPLES

The present inventors have variously experimented and investigated for practically realizing a method for decomposing and removing ammonia contained in rearing water with ozone, and in the process of the experiments and the investigations, have found that the constitution of an ozone treatment apparatus, pH of water to be treated to be ozone-treated and the ozone concentration of a gas supplied in the ozone treatment exert a significant influence on the bromic acid generation amount with respect to the ammonia decomposition amount by the ozone treatment.

First, the influence exerted on the bromic acid generation amount with respect to the ammonia decomposition amount by a difference of the constitution of an ozone treatment apparatus will be explained referring to a difference of the method of supplying ozone to water to be treated and the presence or absence of ultraviolet irradiation, by way of example.

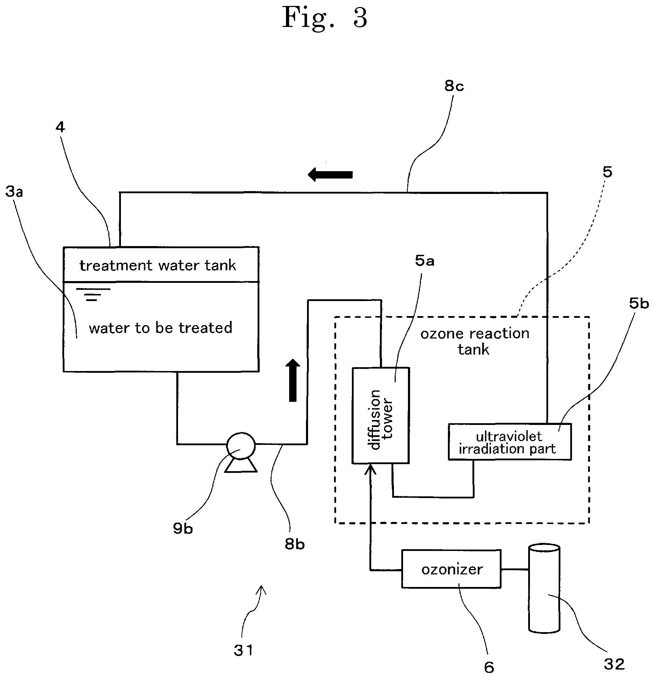

As an example, a treatment model 31 in which water to be treated circulates between a treatment water tank and an ozone reaction tank while undergoing an ozone treatment as shown in Fig. 3 was used supposing partial removal of rearing water from the rearing water tank in the closed rearing apparatus 1 of the batch treatment mode described above. Since the constitutions and actions of parts of this treatment model 31 are common to those of the closed rearing apparatus 1, the same numerals are used and explanations thereof are omitted. In the present treatment model 31, a cylindrical diffusion tower 5a having a volume of 17 L was used.

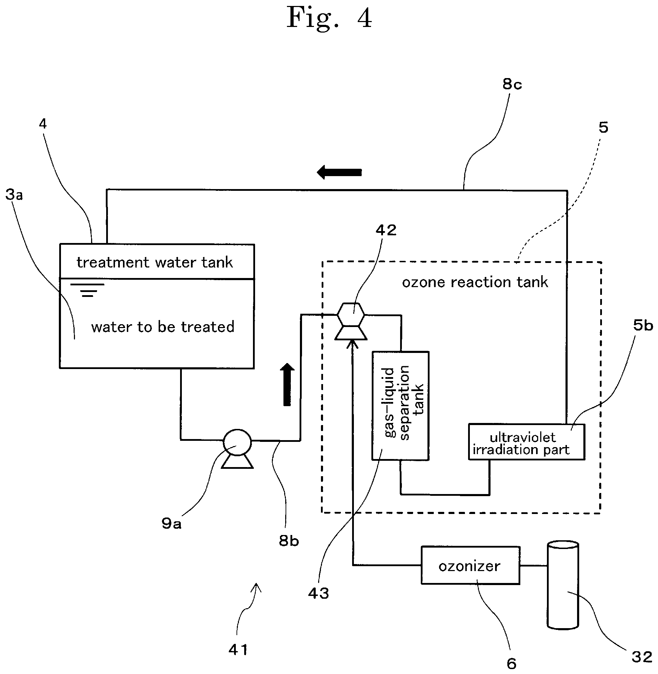

As a comparative example, a treatment model 41 in which the method of supplying ozone to water to be treated is altered from the method by a diffusion tower to stirring using a mixing pump 42 and a gas-liquid separation tank 43 is disposed between the mixing pump 42 and the ultraviolet irradiation part 5b as shown in Fig. 4 was used. The differential pressure of this mixing pump 42 was set to 0.4 MPa which is believed to generate the best supply efficiency.

In both the treatment models 31, 41, a water tank having an internal content of 123.75 L was used as the treatment water tank 4, a disinfectant UV lamp was used as the ultraviolet irradiation part 5b, and an oxygen cylinder 32 was used as an ozone gas raw material.

By the example and the comparative example constituted as described above, the influence exerted on the bromic acid generation amount with respect to the ammonia decomposition amount by a difference of the method of supplying ozone to water to be treated was verified. The test conditions and the test methods are as described below.

Ingredients of artificial seawater were added to pure water to prepare artificial seawater having a salt concentration of 3.2%, and this artificial seawater was stored each in an amount of 80 L in the respective treatment water tanks 4 of the treatment model 31 and the treatment model 41, simulating the water to be treated 3a extracted from the rearing water tank 2. For simulating ammonia contained in the water to be treated 3a, ammonium chloride was added to this artificial seawater to adjust the ammonia nitrogen concentration to 30 mg/L.

The circulating amount of water to be treated supplied from the treatment water tank 4 to the ozone reaction tank 5 was set at 30 L/min and a pure oxygen gas was supplied, as the ozone gas raw material, from the oxygen cylinder 32 to the ozonizer 6 at an air flow rate of 2 L/min, and ozone generated in the ozonizer 6 was supplied from the diffusion tower 5a or the mixing pump 42 to the water to be treated 3a. In this process, the ozone concentration was set at 30 g/m³ (ozone input amount: 3.6 g/h).

The ozone treatment on the water to be treated 3a was performed for 3.5 hours according to respective ozone supply methods for the treatment model 31 and the treatment model 41, and water was sampled every hour and the concentration of ammonia and the concentration of bromic acid contained in the water to be treated were measured, and the ammonia decomposition amount and the bromic acid generation amount were calculated. During the experiment, the temperature of the water to be treated was maintained at 20°C by using a chiller and pH of the water to be treated was maintained at 7.0 by automatically dropping hydrochloric acid and sodium hydroxide.

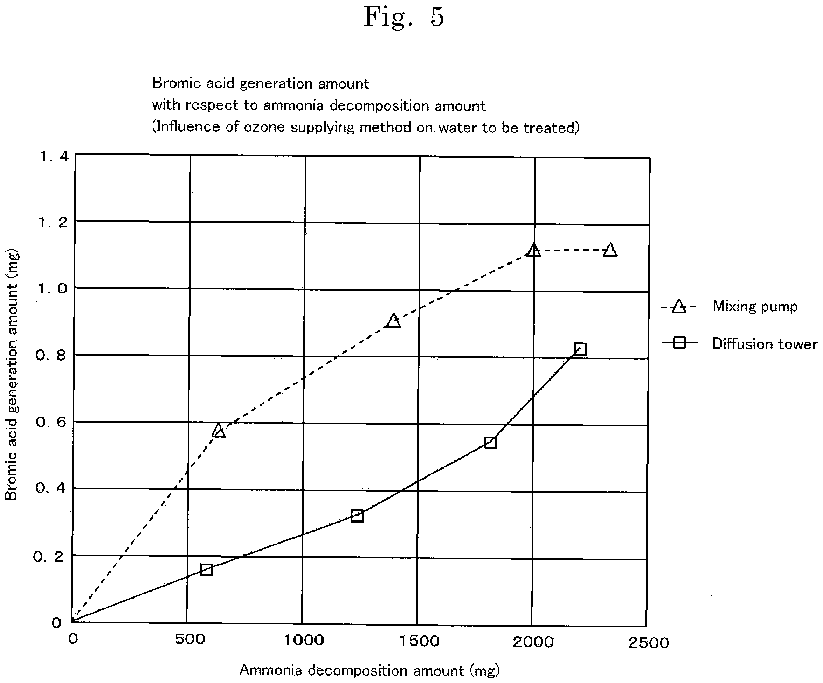

The test results are as shown in Fig. 5, and the ammonia decomposition ability is slightly higher in the case of use of the mixing pump than in the case of use of the diffusion tower, while the bromic acid generation amount with respect to the ammonia decomposition amount is smaller in the case of use of the diffusion tower than in the case of use of the mixing pump, and particularly, until the ammonia decomposition amount exceeds 2000 mg, the bromic acid generation amount when the diffusion tower is used is as clearly small as about 1/3 of the bromic acid generation amount when the mixing pump is used. In light of the test results, ozone is supplied to water to be treated by using a diffusion tower in the closed rearing apparatus of the present invention, for minimizing generation of bromic acid.

Next, as an example, the treatment model was constituted in the same manner as for the treatment model 31 excepting that the diffusion tower 5a of the treatment model 31 shown in Fig. 3 was changed from the cylinder having a volume of 17 L to a cylinder having a volume of 30 L, while as a comparative example, the disinfectant UV lamp of the treatment model was turned off, simulating no ultraviolet irradiation.

By the example and the comparative example constituted as described above, the influence exerted on the bromic acid generation amount with respect to the ammonia decomposition amount by the presence or absence of ultraviolet irradiation was verified. The test conditions and the test methods are as described below.

Ingredients of artificial seawater were added to pure water to prepare artificial seawater having a salt concentration of 3.2%, and this artificial seawater was stored in an amount of 100 L in the treatment water tank 4, simulating the water to be treated 3a extracted from the rearing water tank 2. For simulating ammonia contained in the water to be treated 3a, ammonium chloride was added to this artificial seawater to adjust the ammonia nitrogen concentration to 50 mg/L.

The circulating amount of the water to be treated 3a supplied from the treatment water tank 4 to the ozone reaction tank 5 was set at 30 L/min and a pure oxygen gas was supplied, as the ozone gas raw material, from the oxygen cylinder 32 to the ozonizer 6 at an air flow rate of 2 L/min, and ozone generated in the ozonizer 6 was supplied from the diffusion tower 5a to the water to be treated. In this process, the ozone concentration was set at 30 g/m³ (ozone input amount: 3.6 g/h).

In both the example and the comparative example, the water to be treated 3a was treated with ozone for 8 hours, and water was sampled every 2 hours from initiation of the treatment and the concentration of ammonia and the concentration of bromic acid contained in the water to be treated were measured, and the ammonia decomposition amount and the bromic acid generation amount were calculated. During the experiment, the temperature of the water to be treated was maintained at 20°C by using a chiller and pH of the water to be treated was maintained at 8.0 by automatically dropping hydrochloric acid and sodium hydroxide.

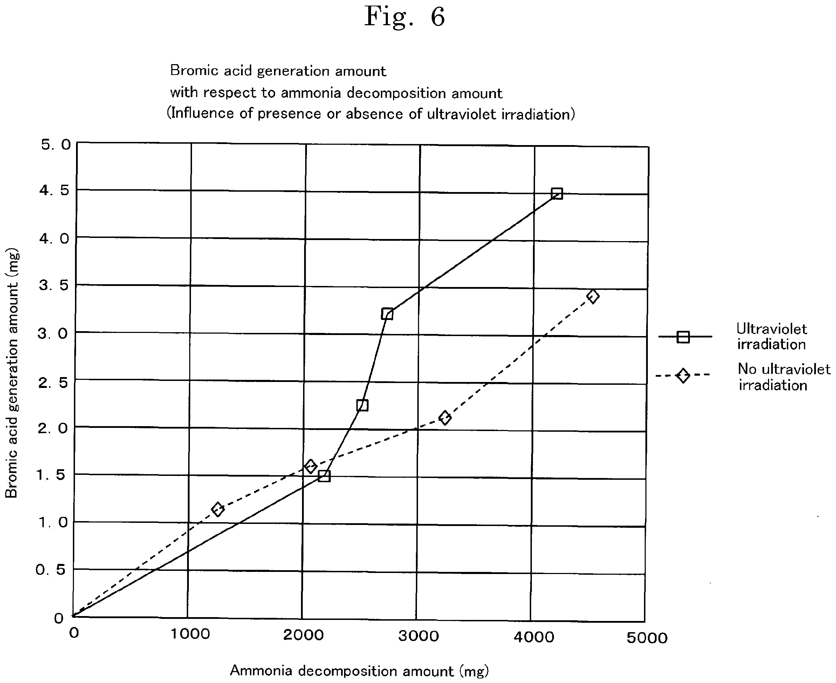

The test results are as shown in Fig. 6, and the bromic acid generation amount with respect to the ammonia decomposition amount which was originally not much different became higher, from around when the ammonia decomposition amount exceeded 2000 mg, in the case of the presence of ultraviolet irradiation than in the case of the absence of ultraviolet irradiation, and from when the ammonia decomposition amount exceeded 3000 mg, its difference was around 1.3-fold, revealing that bromic acid was generated in larger amount in the case of the presence of ultraviolet irradiation.

As apparent from the above-mentioned descriptions, even if the same amount of ammonia is decomposed and removed, the amount of the resultantly generated bromic acid shows a non-negligible difference, depending on a difference of the constitution of a treatment apparatus such as a difference of the method of supplying ozone to water to be treated and the presence or absence of ultraviolet irradiation.

Next, the fact that a difference of pH of water to be treated to be subjected to the ozone treatment and a difference of the ozone concentration of a gas to be supplied in the ozone treatment exert a significant influence on the bromic acid generation amount is explained.

In the present experiment, waters to be treated having different pH were subjected to the ozone treatment with the same ozone concentration, and the influence exerted on the bromic acid generation amount with respect to the ammonia decomposition amount by a difference of pH of the water to be treated was verified. In the present experiment, one constituted in the same manner as for the treatment model 31, excepting that the diffusion tower 5a of the treatment model 31 shown in Fig. 3 was changed to a cylinder having a volume of 30 L, was used. The test conditions and the test method are as described below.

Ingredients of artificial seawater were added to pure water to prepare artificial seawater having a salt concentration of 3.2%, and this artificial seawater was stored in an amount of 100 L in the treatment water tank 4, simulating the water to be treated 3a extracted from the rearing water tank 2. For simulating ammonia contained in the water to be treated 3a, ammonium chloride was added to this artificial seawater to adjust the ammonia nitrogen concentration to 50 mg/L. This artificial seawater was adjusted to pH6.0, pH7.0 and pH8.0 to prepare three kinds of waters to be treated, all the pH values being in the range from mild acidity to mild alkalinity in which aquatic organisms and marine animals can live.

The circulating amount of the water to be treated 3a supplied from the treatment water tank 4 to the ozone reaction tank 5 was set at 30 L/min and a pure oxygen gas was supplied, as the ozone gas raw material, from the oxygen cylinder 32 to the ozonizer 6 at an air flow rate of 2 L/min, and ozone generated in the ozonizer 6 was supplied from the diffusion tower 5a to the water to be treated. In this process, the ozone concentration was set at 30 g/m³ (ozone input amount: 3.6 g/h).

The waters to be treated 3a adjusted to three pH values were treated with ozone each for 8 hours, and water was sampled 4 hours, 6 hours and 8 hours after initiation of the treatment and the ammonia concentration and the bromic acid concentration of the water to be treated were measured, and the ammonia decomposition amount and the bromic acid generation amount were calculated. During the experiment, the temperature of the water to be treated was maintained at 20°C by using a chiller and pH of each water to be treated was maintained by automatically dropping hydrochloric acid and sodium hydroxide.

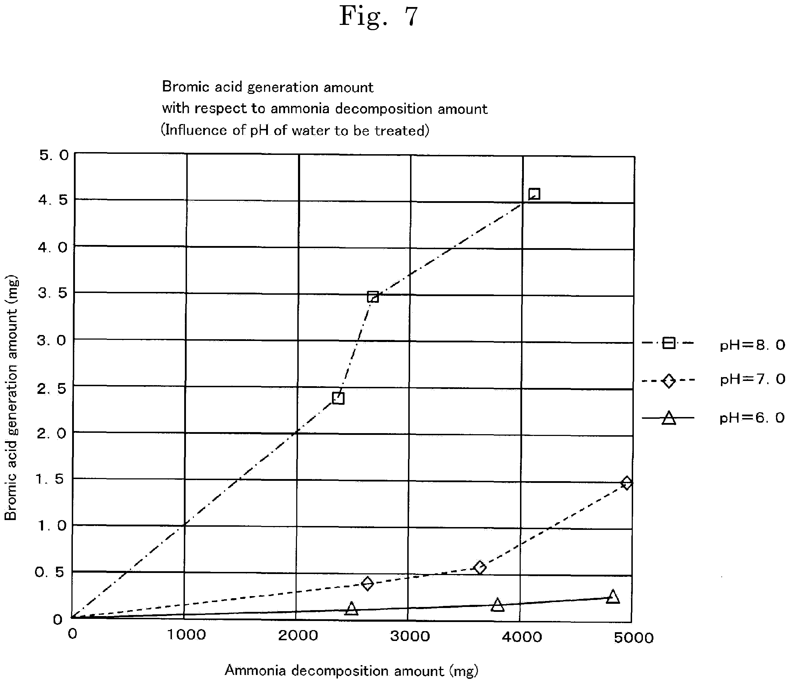

The test results are as shown in Fig. 7, the bromic acid generation amount with respect to the ammonia decomposition amount when the concentration of ozone to be supplied is 30 g/m³ is significantly influenced by a difference of pH of water to be treated, and when the bromic acid generation amount of water to be treated of pH 6 is used as the standard, bromic acid is generated in an amount of about 3 to 5-fold in the case of water to be treated of pH7 and generated in an amount of about 15 to 25-fold in the case of water to be treated of pH8, and particularly in the case of pH8, an extremely significant difference is present. That is, it is confirmed that in the case of decomposition of the same amount of ammonia, a remarkably large amount of bromic acid is generated when pH of water to be treated is higher, in the range from mild acidity to mild alkalinity.

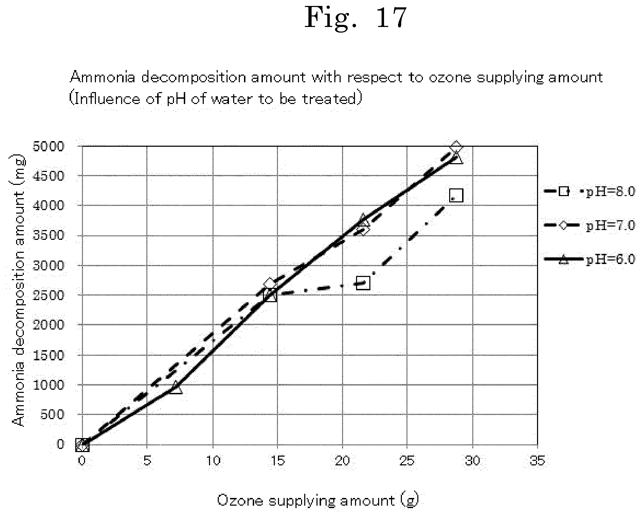

In Fig. 17, the data obtained in the above-described test are graphed showing a correlation of the ozone supply amount and the ammonia decomposition amount, and it is understood from this figure that the ammonia decomposition amount with respect to the ozone supply amount is scarcely influenced by pH. That is, when the ozone concentration is constant, the ozone cumulative supply amount is correlated with the ammonia decomposition amount, and approximately the same amount of ammonia can be decomposed even if pH varies in a range in which aquatic organisms and marine animals can inhabit.

For obtaining a more detailed finding on the influence of pH of water to be treated on the bromic acid generation amount with respect to the ammonia decomposition amount described above, an experiment was performed while changing the concentration of ozone to be supplied. In the present experiment, one constituted in the same manner as for the treatment model 31, excepting that the ultraviolet irradiation part 5b of the treatment model 31 shown in Fig. 3 was removed, was used. The test conditions and the test method are as described below.

Ingredients of artificial seawater were added to pure water to prepare artificial seawater having a salt concentration of 3.2%, and this artificial seawater was stored in an amount of 80 L in the treatment water tank 4, simulating the water to be treated 3a extracted from the rearing water tank 2. For simulating ammonia contained in the water to be treated 3a, ammonium chloride was added to this artificial seawater to adjust the ammonia nitrogen concentration to 31.25 mg/L. This artificial seawater was adjusted to pH6.0, pH7.0 and pH8.0 to prepare three kinds of waters to be treated.

The circulating amount of the water to be treated 3a supplied from the treatment water tank 4 to the ozone reaction tank 5 was set at 30 L/min and a pure oxygen gas was supplied, as the ozone gas raw material, from the oxygen cylinder 32 to the ozonizer 6 at an air flow rate of 2 L/min, and ozone generated in the ozonizer 6 was supplied from the diffusion tower 5a to the water to be treated. In this process, the ozone concentration was set at four conditions: 80 g/m³ (ozone supply amount: 9.6 g/h), 50 g/m³ (ozone supply amount: 6.0 g/h), 14 g/m³ (ozone supply amount: 1.68 g/h) and 4 g/m³ (ozone supply amount: 0.48 g/h).

To the waters to be treated 3a adjusted to three pH values were supplied the gases having the ozone concentration according to the above-described four conditions (12 conditions in total) and the ozone treatment was performed, water was sampled at appropriate time points and the ammonia concentration and the bromic acid concentration of the water to be treated at each time point were measured, and the ammonia decomposition amount and the bromic acid generation amount were calculated. During the experiment, the temperature of the water to be treated was maintained at 20°C by using a chiller and pH of each water to be treated was maintained by automatically dropping hydrochloric acid and sodium hydroxide.

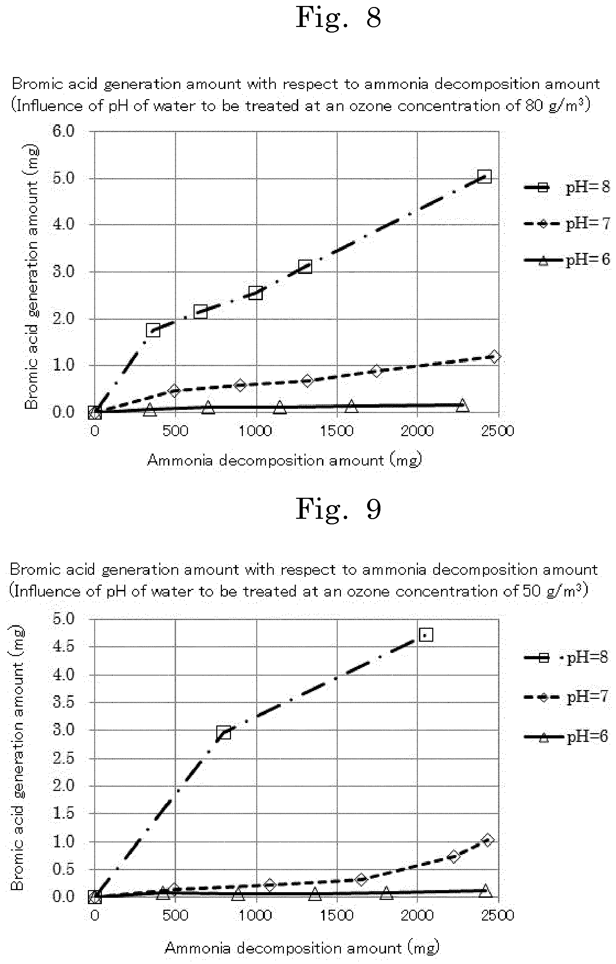

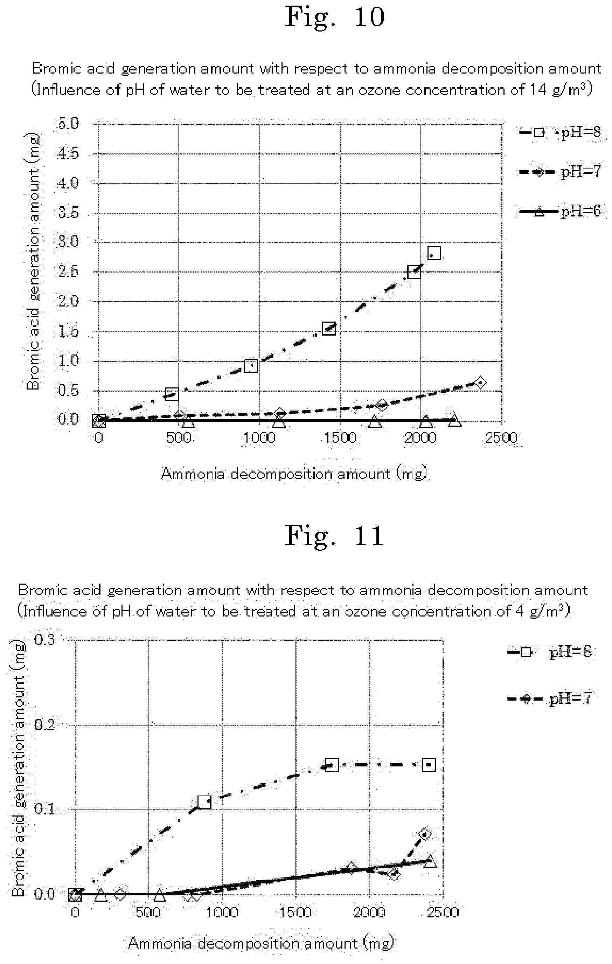

The test results are as shown in Fig. 8 to Fig. 11. At any of the ozone concentration conditions, the result is obtained that bromic acid is generated in larger amount when pH is higher and particularly at pH8, a significant difference is obtained, like the result shown in Fig. 7. That is, it is confirmed that in the case of decomposition of the same amount of ammonia, a remarkably large amount of bromic acid is generated when pH of water to be treated is higher, in the range from mild acidity to mild alkalinity, irrespective of the concentration of ozone to be supplied.

In the next experiment, gases having different ozone concentrations (density) were diffused and supplied to water to be treated by the diffusion tower 5a, and the influence exerted on the bromic acid generation amount with respect to the ammonia decomposition amount by a difference of the ozone concentration was verified. In the present experiment, one constituted in the same manner as for the treatment model 31, excepting that the diffusion tower 5a of the treatment model 31 shown in Fig. 3 was changed to a cylinder having a volume of 30 L, was used. The test conditions and the test method are as described below.

Ingredients of artificial seawater were added to pure water to prepare artificial seawater having a salt concentration of 3.2%, and this artificial seawater was stored in an amount of 100 L in the treatment water tank 4, simulating the water to be treated 3a extracted from the rearing water tank 2. For simulating ammonia contained in the water to be treated, ammonium chloride was added to this artificial seawater to adjust the ammonia nitrogen concentration to 30 mg/L.

The circulating amount of the water to be treated 3a supplied from the treatment water tank 4 to the ozone reaction tank 5 was set at 30 L/min and a pure oxygen gas was supplied, as the ozone gas raw material, from the oxygen cylinder 32 to the ozonizer 6, and the supply amount of the pure oxygen gas was controlled so that the concentration of ozone of a gas supplied to the diffusion tower 5a was 50 g/m³, 30 g/m³ or 4 g/m³.

To the above-described waters to be treated 3a were supplied gases having each ozone concentration (50 g/m³, 30 g/m³, 4 g/m³) and the ozone treatment was performed, water was sampled at appropriate time points and the ammonia concentration and the bromic acid concentration of the water to be treated at each time point were measured, and the bromic acid generation amount with respect to the ammonia decomposition amount was calculated. During the experiment, the temperature of the water to be treated was maintained at 20°C by using a chiller and pH of the water to be treated was maintained at 8.0 by automatically dropping hydrochloric acid and sodium hydroxide.

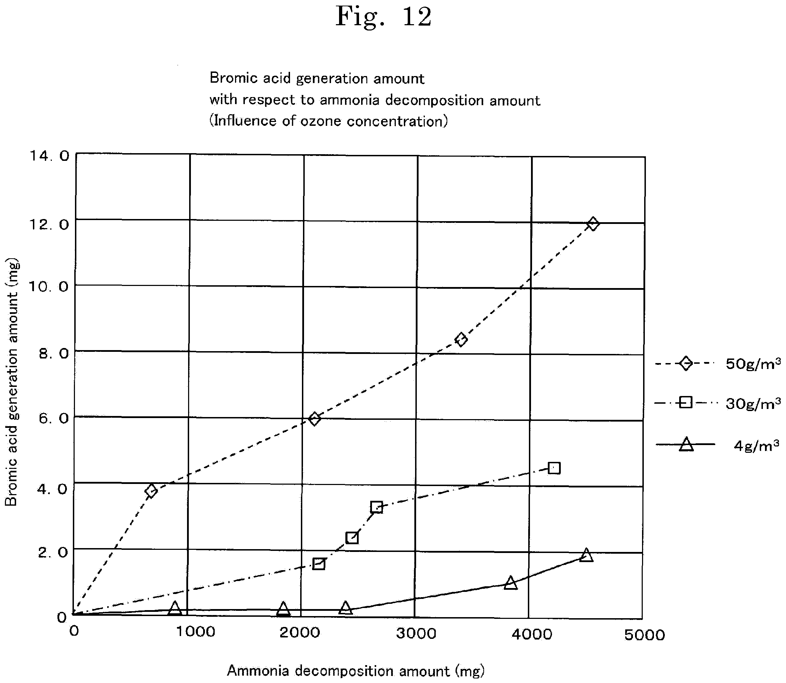

The test results are as shown in Fig. 12, the bromic acid generation amount with respect to the ammonia decomposition amount is significantly influenced by the ozone concentration, and when the bromic acid generation amount in the treatment at an ozone concentration of 4 g/m³ is used as the standard, bromic acid is generated in an amount of about 2-fold in the treatment at an ozone concentration of 30 g/m³ and generated in an amount of about 6-fold in the treatment at an ozone concentration of 50 g/m³. This teaches that lowering of the ozone concentration of a gas supplied for the ozone treatment is an extremely effective treatment means since the bromic acid generation amount can be remarkably suppressed when the ozone concentration of a gas supplied for the ozone treatment is lower, for decomposing and removing the same amount of ammonia. In the treatment at an ozone concentration of 4 g/m³, the bromic acid generation amount is as almost none as 0.15 mg or less until the ammonia decomposition amount becomes around 2500 mg, thus, if the treatment is continued at this ozone concentration, a risk of generation of bromic acid (toxic oxidant) can be minimized under the condition of a pH of water to be treated of 8.0.

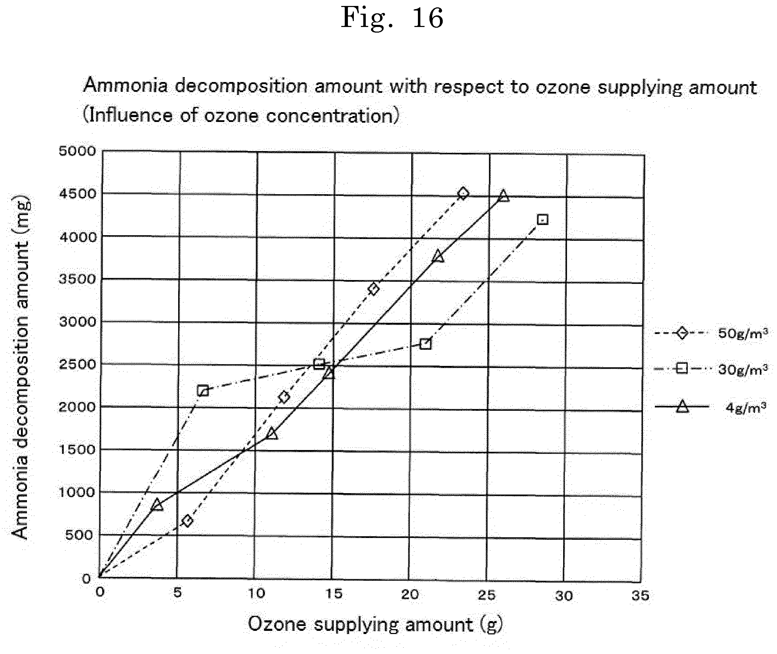

In Fig. 16, the data obtained in the above-described test are graphed showing a correlation of the ozone supply amount and the ammonia decomposition amount, and it is understood from this figure that the ammonia decomposition amount with respect to the ozone supply amount is scarcely influenced by the ozone concentration. That is, rather the ozone cumulative supply amount than the ozone concentration is correlated with the ammonia decomposition amount, and approximately the same amount of ammonia can be decomposed when the ozone cumulative supply amount is the same even if the ozone concentration is lower or higher.

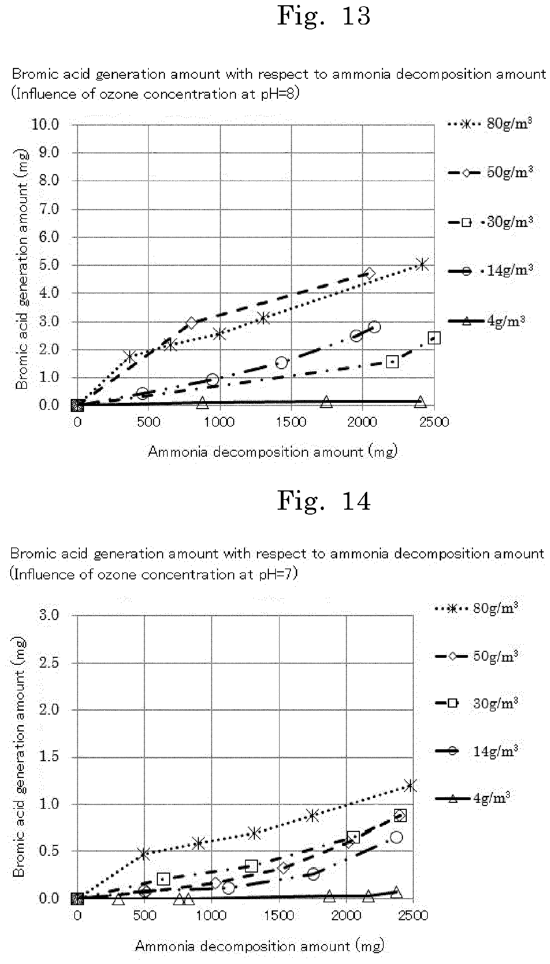

For obtaining a more detailed finding on the influence of the concentration of ozone supplied on the bromic acid generation amount with respect to the ammonia decomposition amount described above, the data obtained in the tests shown in Fig. 7 to Fig. 11 are summarized for each pH of water to be treated, and graphed in Fig. 13 to Fig. 15.

The generation amount of bromic acid at an ozone concentration of 4 g/m³ is extremely low, under the condition of pH8.0, as shown in Fig. 13, like the test of which results are shown in Fig. 12 described above. Additionally, the bromic acid generation amount is slightly lower in the case of treatment under the condition of an ozone concentration of 80 g/m³ than in the case of treatment under the condition of an ozone concentration of 50 g/m³, and the bromic acid generation amount is about 1.5-fold higher in the case of treatment under the condition of 14 g/m³ than in the case of treatment under the condition of an ozone concentration of 30 g/m³. That is, it is confirmed that when the ammonia generation amount of aquatic organisms and marine animals is large and it is impossible to keep a concentration not higher than the acceptable survival ammonia concentration by the treatment at an ozone concentration of 4 g/m³, under the condition of a pH of water to be treated of 8.0, then, it is appropriate to adjust the concentration of ozone supplied to 30 g/m³ or less.

The generation amount of bromic acid at an ozone concentration of 4 g/m³ is extremely low, under the condition of pH7.0, as shown in Fig. 14, like the test at pH8 described above. Additionally, the bromic acid generation amount does not show a significant difference in the cases of treatment under the condition of an ozone concentration of 50 g/m³, 30 g/m³ and 14 g/m³. That is, it is confirmed that when the ammonia generation amount of aquatic organisms and marine animals is large and it is impossible to keep a concentration not higher than the acceptable survival ammonia concentration by the treatment at an ozone concentration of 4 g/m³, under the condition of a pH of water to be treated of 7.0, then, it is appropriate to adjust the concentration of ozone supplied to 50 g/m³ or less.

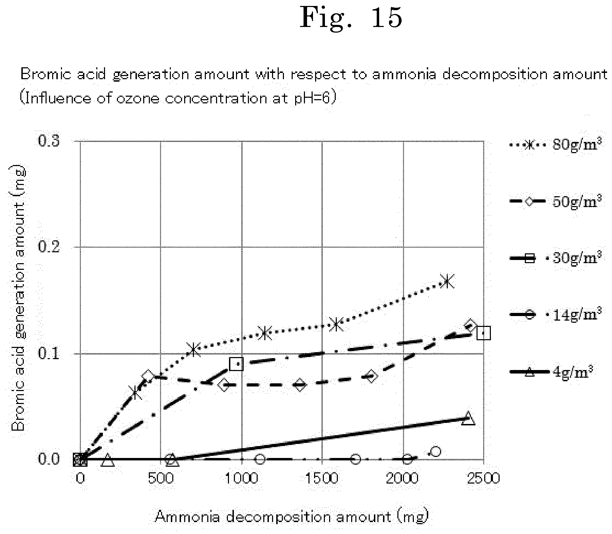

The bromic acid generation amount is extremely low at all conditions, under the condition of pH6.0, as shown in Fig. 15, however, particularly in the case of treatment under the condition of an ozone concentration of 50 g/m³ or less, the bromic acid generation amount is as almost none as 0.15 mg or less even in the case of decomposition of about 2500 mg of ammonia, thus, it is confirmed that if the treatment is continued at this ozone concentration, a risk of generation of bromic acid (toxic oxidant) can be minimized under the condition of a pH of water to be treated of 6.0.

It is understood from the test results shown in Fig. 12 to Fig. 16 that when ammonia contained in rearing water is decomposed and removed, the lower ozone concentration of a gas supplied to an ozone reaction vessel has an extremely advantageous effect capable of reducing the generation amount of toxic bromic acid and that the ammonia decomposition ability of ozone is scarcely influenced by a difference of the ozone concentration but significantly influenced by the cumulative supply amount of ozone, thus, ammonia contained in rearing water can be surely decomposed and removed by elongating the treatment time so as not to reach the acceptable ammonia concentration for inhabitation of aquatic organisms and marine animals even if the ozone concentration of a gas supplied to an ozone reaction vessel is lower.

It is confirmed from the above-described results that pH of rearing water is preferably in the range of 6 to 8 in the closed rearing method of the present embodiment and generation of bromic acid can be minimized when the concentration of ozone in a gas containing ozone supplied to rearing water is 4 g/m³, at any pH. When the rearing quantity of aquatic organisms and marine animals is large, however, the ammonia generation amount also correspondingly increases, thus, the sufficient ammonia treatment speed is not obtained in some cases at an ozone concentration of 4 g/m³. In this case, it is preferable to set these conditions at an ozone concentration of 30 g/m³ or less around pH=8 and at an ozone concentration in a range of 50 g/m³ or less around pH=6 to 7, for sufficiently suppressing generation of bromic acid and obtaining sufficient treatment speed.

As explained above, it is apparent that factors affecting generation of oxidants when ozone-treating ammonia contained in rearing water are diverse, and it is difficult to determine the ozone concentration by calculation, with which generation of oxidants can be minimized, in light of all the factors.

Since the bromic acid generation amount with respect to the ammonia decomposition amount in the ozone treatment is significantly influenced by the constitution of an ozone treatment apparatus and pH of water to be treated to be subjected to ozone treatment and the ozone concentration of a gas supplied in the ozone treatment, it is necessary to perform the ozone treatment via a first step in which ammonia contained in rearing water is previously reduced to the target value by using an apparatus for actually conducting the treatment, and the suitable ozone concentration and pH conditions of rearing water causing least generation of bromic acid are determined.

Though it is expected that these conditions vary depending on the constitution of the apparatus, a mild treatment in which pH of water to be treated is controlled in the mild acidic range from 6.0 to 7.0 and a gas having high ozone concentration is not prepared but a gas containing ozone at a middle to low concentration of about 50 to 4 g/m³ is rather prepared and supplied for a long period of time to decompose and remove ammonia in water to be treated even if the ammonia concentration is very high is extremely effective for suppressing generation of bromic acid, in the constitution of the apparatus used in the experiment by the present inventors.

The step 1 is conducted when the apparatus is driven initially after setting at the field site, and additionally, for example, conducted before shipping in a certain case. In the latter case, it may be permissible that the apparatus is set at the field side, then, the data acquired before shipping is used without performing the step 1 again. It is not necessarily required to perform the step 1 on all the apparatuses and it may be permissible that the step 1 is performed on one apparatus and the data obtained in this procedure is applied to other apparatuses having the same constitution.

In the step 1, the degree of generation of toxic oxidants (bromic acid) according to the ozone concentration and pH conditions is measured, however, the toxic oxidant amount may be obtained by directly measuring its concentration, or may be obtained indirectly based on other data (ORP, ammonia amount, residual chlorine concentration and the like) acting as some index.

Because there is no method for measuring in real time the amount of bromic acid in rearing water under existing conditions, time for analyzing the amount of generation of bromic acid at each condition after conducting the step 1 is necessary. Therefore, conducting the step 1 before shipping is advantageous for acquisition and analysis of various data.

In the step 2, decomposition and removal of ammonia of rearing water are conducted according to the suitable pH of water to be treated and the suitable ozone concentration of a gas supplied in the ozone treatment determined in the first step 1. By ozone-treating water to be treated according to such suitable conditions, rearing water can be purified while minimizing the amount of generation of bromic acid in the ozone treatment.

As explained above, since the closed rearing method and the closed rearing apparatus of the present invention can suppress generation of bromic acid in decomposing and removing toxic ammonia contained in rearing water for rearing aquatic organisms and marine animals with ozone, water qualities and circumstances in which aquatic organisms and marine animals can live can be maintained continuously even in the case of rearing of aquatic organisms and marine animals in a closed environment. Further, since the present invention can be applied not only to decomposition and removal of ammonia with ozone but also to decomposition and removal of hypochlorous acid generated by seawater electrolysis, its value is very large.

### Explanation of numerals

- 1:: closed rearing apparatus
- 2:: rearing water tank
- 3:: rearing water
- 3a:: water to be treated
- 4:: treatment water tank
- 5:: ozone reaction tank
- 5a:: diffusion tower
- 5b:: ultraviolet irradiation part
- 6:: ozonizer
- 7:: water quality controlling tank
- 8:: pipeline
- 9:: water delivery pump
- 10:: discharge port

## Claims

1. A closed rearing method for aquatic organisms and marine animals involving an ozone treatment for decomposing ammonia in rearing water by supplying a gas containing ozone into the rearing water, **characterized in that** aquaculture is performed in a closed environment by a first step for determining the ozone concentration of the gas and pH conditions of the rearing water suitable for reducing the amount of generation of toxic oxidants by previously treating the rearing water to reduce ammonia contained therein to the target value by using an apparatus for actually conducting the treatment and a second step for conducting an ozone treatment of the rearing water according to the suitable ozone concentration and pH conditions determined in said first step.

2. The closed rearing method according to Claim 1, wherein a gas containing ozone is supplied to the rearing water by means of a diffusion tower.

3. A closed rearing apparatus for fish and shellfish for performing an ozone treatment for decomposing ammonia in rearing water by supplying a gas containing ozone into the rearing water, **characterized in that** the apparatus performs aquaculture in a closed environment by a setting means for determining the ozone concentration of the gas and pH conditions of the rearing water suitable for reducing the amount of generation of toxic oxidants by previously treating the rearing water to reduce ammonia contained therein to the target value and a treating means for conducting an ozone treatment of the rearing water according to the suitable ozone concentration and pH conditions determined by the setting means.

4. The closed rearing apparatus according to Claim 3, equipped with a diffusion tower for supplying a gas containing ozone to the rearing water.
